# EUROPÄISCHE PATENTANMELDUNG

(11) **EP 3 862 718 A1**
(43) Veröffentlichungstag der Anmeldung: **11.08.2021**
(21) Anmeldenummer: 21152648.8
(22) Anmeldetag: 21.01.2021
(51) Int. Cl.: F41G 7/00, F41G 7/34, G01S 5/14, G01S 5/02

(54) **VERFAHREN ZUR ERMITTLUNG VON POSITIONSINFORMATIONEN FÜR EINEN EFFEKTOR, EFFEKTOR, RECHNEREINHEIT UND WAFFENSYSTEM**

(30) Priorität: 04.02.2020 DE 102020000711
(71) Anmelder: Diehl Defence GmbH & Co. KG, 88662 ÜBERLINGEN (DE)
(72) Erfinder: Selz, Andre, 88662 Überlingen (DE); Freter, René, 88634 Herdwangen-Schönach (DE)
(74) Vertreter: Diehl Patentabteilung

(57) **Zusammenfassung**

Die zu Grunde liegende Erfindung betrifft insbesondere ein Verfahren zur Ermittlung von Positionsinformationen (d1, d2, d3) für einen Effektor (2) nach Abschuss von einer Abschusseinheit (3) eines Waffensystems (1) umfassend den Effektor (2) und zumindest eine vom Effektor (2) verschiedene Waffensystemeinheit (3, 4, 6). Nach einer effektorseitigen Ausgestaltung des Verfahrens empfängt der Effektor (2) ein Zeitsynchronisationssignal (t) derart, dass der Effektor (2) und die zumindest eine Waffensystemeinheit (3, 4, 6) spätestens bei Abschuss des Effektors (2) zeitlich synchronisiert sind. Ferner empfängt der Effektor Positionsdaten (P) der zumindest einen Waffensystemeinheit (3, 4, 6), und eines Zeitstempels (Z) in eineindeutiger Zuordnung zu den Positionsdaten (P) über eine drahtlose Kommunikationsverbindung nach Abschuss des Effektors (2). Basierend auf dem Zeitstempel (Z), der Effektor-Eigenzeit (E) bei Empfang des Zeitstempels (Z), und den dem Zeitstempel (Z) eineindeutig zugeordneten Positionsdaten (P) werden Positionsinformationen (d1, d2, d3) ermittelt.

## Beschreibung

Die zu Grunde liegende Erfindung betrifft insbesondere ein Verfahren zur Ermittlung von Positionsinformationen für einen Effektor nach Abschuss von einer Abschusseinheit eines Waffensystems, einen entsprechenden Effektor, eine entsprechende Rechnereinheit, sowie ein entsprechendes Waffensystem.

Viele militärische Systeme verwenden zur Positionsermittlung und zur Navigation eines Effektors, z.B. eines Lenkflugkörpers eines Waffensystems, zu einem Zielort satellitenbasierte Radionavigationssysteme (z.B. GPS). Zwar liefern solche Systeme vergleichsweise genaue Positionsdaten, jedoch besteht das Problem, dass solche Systeme im Ernstfall unter Umständen nicht zur Verfügung stehen, beispielsweise dann, wenn diese in der Hand von einzelnen Staaten sind. Um dieses Problem zu umgehen weisen Effektoren oder Lenkflugkörper oftmals zusätzliche Trägheitsnavigationssysteme bzw. inertiale Navigationssysteme auf. Allerdings kann auf Grund von Messungenauigkeiten der in Trägheitsnavigationssystemen verwendeten Sensorik die Leistungsfähigkeit und Performanz bei der Positionsbestimmung gegenüber Radionavigationssystemen nachteilig verringert sein.

Bei bodengestützten Luftverteidigungssystemen (engl.: Ground Based Air Defence, GBAD) kommen unter anderem auch Radarsysteme zur Anwendung, wobei ein jeweiliges Radar des zugehörigen Waffensystems den abgeschossenen Effektor, bzw. Flugkörper oder Lenkflugkörper, zur Positionsermittlung auffasst, und die ermittelte Position zur Navigation verwendet wird. Zwar sind solche Radarsysteme auch fehlerbehaftet, eine Fehlerkorrektur ist jedoch über den Radarrückkanal meist möglich. Ein Nachteil besteht allerdings darin, dass die Positionsbestimmung und Navigation im Ernstfall nicht ohne das Radarsystem durchführbar ist, so dass eine eigentlich nicht erwünschte starke Abhängigkeit zwischen Effektor und Radar besteht.

Ausgehend davon ist es insbesondere eine Aufgabe der Erfindung, ein verbessertes Verfahren zur Ermittlung von Positionsinformationen und zur Navigation für Effektoren, insbesondere Flugkörper bzw. Lenkflugkörper, eines Waffensystems bereitzustellen, welches insbesondere im Ernstfall eine zuverlässige Positionsermittlung und ggf. Navigation eines Effektors nach dessen Abschuss ermöglicht. Ferner sollen ein entsprechender Effektor, eine entsprechende Rechnereinheit und ein entsprechendes Waffensystem bereitgestellt werden.

Diese Aufgabe wird erfindungsgemäß gelöst durch die Merkmale der unabhängigen Ansprüche. Ausgestaltungen der Erfindung ergeben sich insbesondere aus den abhängigen Ansprüchen, sowie aus den nachfolgend beschriebenen Ausgestaltungen, Ausführungsformen und Ausführungsbeispielen.

Gemäß einer Ausgestaltung ist ein computer-implementiertes Verfahren zur Ermittlung von Positionsinformationen für einen Effektor nach Abschuss von einer Abschusseinheit (engl. Launcher) eines Waffensystems vorgesehen.

Das Waffensystem kann zumindest einen Effektor und zumindest eine Abschusseinheit umfassen, wobei die zumindest eine Abschusseinheit eingerichtet ist zum Abschuss des Effektors.

Bei dem Effektor kann es sich um einen Flugkörper, insbesondere einen Lenkflugkörper handeln. Insbesondere kann es sich bei dem Effektor um einen zum Anflug auf einen Zielort oder ein Zielobjekt eingerichteten Flugkörper, insbesondere einen Lenkflugkörper, handeln.

Das Waffensystem umfasst den Effektor und zumindest eine vom Effektor verschiedene, mobile oder stationäre Waffensystemeinheit. Bei der Waffensystemeinheit kann es sich beispielsweise um eine dem Effektor zu dessen Abschuss zugeordnete Abschusseinheit handeln, eine davon verschiedene weitere Abschusseinheit, oder um eine sonstige, datenkommunikationstechnisch in das Waffensystem integrierte oder integrierbare Einheit, wie beispielsweise ein unbemanntes Flugsystem, insbesondere eine Drohne, ein bodenbasiertes Fahrzeug, ein Kontrollzentrum (engl. insbesondere ein sog. Tactical Operations Center - TOC), ein Flugzeug, ein Flugkörper, ein Schiff, eine insbesondere bodengestützte Sendeeinheit, bzw. einen bodengestützten Sender usw..

Umfasst das Waffensystem mehrere Waffensystemeinheiten, so können diese als ein Waffenverbund eingerichtet sein, insbesondere mit gegenseitiger Datenvernetzung zum Austausch von Daten wie Zeitsynchronisation, Position, Kennungen usw.

Das vorgeschlagene computer-implementierte Verfahren umfasst, insbesondere effektorseitig, die nachfolgenden Schritte:
- Empfangen eines Zeitsynchronisationssignals zur Zeitsynchronisierung des Effektors mit der zumindest einen Waffensystemeinheit, derart, dass der Effektor und die zumindest eine Waffensystemeinheit spätestens bei Abschuss des Effektors zeitlich synchronisiert sind;
- Empfangen von Positionsdaten der zumindest einen Waffensystemeinheit des Waffensystems;
- Empfangen eines Zeitstempels in eineindeutiger Zuordnung zu den Positionsdaten über eine drahtlose Kommunikationsverbindung nach Abschuss des Effektors; und
- Ermitteln der Positionsinformationen basierend auf dem Zeitstempel, der Effektor-Eigenzeit bei Empfang des Zeitstempels, und den dem Zeitstempel eineindeutig zugeordneten Positionsdaten basierend bevorzugt auf Laufzeitberechnungen.

In diesem Zusammenhang soll der Begriff "effektorseitig" insbesondere bedeuten, dass die genannten Verfahrensschritte, und etwaige weitere Verfahrensschritte nach Ausgestaltungen des Verfahrens, durch den Effektor ausgeführt werden, beispielsweise durch eine oder mehrere Datenverarbeitungseinheiten des Effektors.

Der Empfang der jeweiligen Daten kann beispielsweise über eine drahtlose Datenkommunikationseinheit des Effektors erfolgen, die unidirektional zum Empfang von Daten oder bidirektional zum Empfang und Senden von Daten ausgebildet sein kann. Insbesondere können die Daten beispielsweise über eine aus Sicht der Waffensystemeinheit ausgebildete Uplink-Verbindung übermittelt werden. Übertragungen vom Effektor zur Waffensystemeinheit, insbesondere zum Waffensystem, können entsprechend über eine Downlink-Verbindungen erfolgen.

Bei einer unidirektionalen Signalübermittlung durch Uplink kann die Ermittlung der Positionsinformationen, insbesondere die Durchführung entsprechender Datenverarbeitungsschritte, mit einer Datenverarbeitungseinheit des Effektors ausgeführt werden. Ist eine bidirektionale Signalübermittlung eingerichtet bzw. möglich, können zumindest Teile der Datenverarbeitungsschritte auf Datenverarbeitungseinheiten einer oder mehrerer Waffensystemsystemeinheiten ausgelagert werden. Allerdings kann es hinsichtlich Datensicherheit, Datenintegrität, und zur Reduktion der Gefahr einer feindlichen Aufklärung von Vorteil sein, wenn die die zu übermittelnde Datenmenge möglichst gering ist, und Ermittlung bzw. die Datenverarbeitungsschritte durch die Datenverarbeitungseinheit des Effektors erfolgt.

Unter einem Zeitstempel soll insbesondere ein Datensignal verstanden werden, auf dessen Grundlage in einem zeitsynchronisierten Kommunikationssystem, bei Kenntnis des Empfangszeitpunkts des Datensignals auf Empfängerseite die zur Übermittlung vom Sender an den Empfänger erforderliche Laufzeit ermittelt bzw. berechnet werden kann. Mit anderen Worten soll unter einem Zeitstempel ein Datensignal verstanden werden, das insbesondere eine Laufzeitberechnung ermöglicht. Im Allgemeinen bezeichnen Zeitstempel eindeutige Zuordnungen zwischen der Zeit und Ereignissen.

Der Zeitstempel im Sinne der vorliegenden Anmeldung kann insbesondere eine zeitliche Signatur des Sendezeitpunkts umfassen, sprich desjenigen Zeitpunkts an dem ein Datenpaket an den Effektor übermittelt wird. Wenn der Effektor und die zumindest eine Waffensystemeinheit bspw. beide einen fortlaufenden Zähler umfassen, welche dazu eingerichtet sind, jeweils um ein einer gleichen Zeitspanne entsprechendes Inkrement hochzuzählen oder um ein Dekrement herunterzuzählen, kann das Zeitsynchronisationssignal zur Zeitsynchronisierung von Effektor und der zumindest einen Waffensystemeinheit zur Synchronisierung der Zählerwerte, d. h. Einstellung der Zähler auf den gleichen Wert, dienen. Der Zeitstempel kann dann anstelle einer Signatur des Sendezeitpunkts einen Zählerwert umfassen. Dies hat den Vorteil, dass hierdurch bei der Übertragung Bandbreite eingespart werden kann. Auch denkbar ist es, dass bspw. nur die zumindest eine Waffensystemeinheit einen Zähler umfasst. In diesem Fall umfasst das Zeitsynchronisationssignal zweckmäßigerweise den aktuellen Zählerwert und die Information, welcher Zeitspanne ein Inkrement bzw. Dekrement entspricht. Basierend auf der bei dem vorgeschlagenen Verfahren durchgeführten Zeitsynchronisation kann der Empfänger, sprich der Effektor, aus der Differenz zwischen Empfangszeitpunkt, d.h. Effektor-Eigenzeit bei Empfang, und Sendezeitpunkt insbesondere die mit der Datenübertragung verbundene Laufzeit ermitteln. Effektor-Eigenzeit bei Empfang und Sendezeitpunkt würden bei der Verwendung von fortlaufenden Zählern den Zählerwerten von Effektor bzw. der zumindest einen Waffensystemeinheit entsprechen. Falls nur die zumindest eine Waffensystemeinheit über einen Zähler verfügen würde, würde die mit dem Zeitsynchronisationssignal übermittelte Information über die einem Inkrement/Dekrement entsprechende Zeitspanne zur Ermittlung der Differenz zwischen Empfangszeitpunkt und Sendezeitpunkt herangezogen werden.

Die Formulierung "in eineindeutiger Zuordnung zu den Positionsdaten" soll insbesondere bedeuten, dass der jeweilige Zeitstempel den jeweiligen Positionsdaten eineindeutig zugeordnet ist. Insbesondere soll die Formulierung "eineindeutige Zuordnung" im Zusammenhang mit dem Begriff Zeitstempel bedeuten, dass die Positionsdaten in dem durch den Zeitstempel definierten Zeitpunkt vorliegen bzw. vorlagen. Mit anderen Worten wird mit dem eineindeutig zugeordneten Zeitstempel den Positionsdaten ein eindeutiger Zeitpunkt bzw. eine eindeutige zeitliche Signatur zugeordnet, wobei der Zeitpunkt dem tatsächlichen Vorliegen der Positionsdaten entspricht.

Der Empfang der Positionsdaten und/oder des Zeitstempels kann insbesondere einen Empfang von einem oder mehreren Datenpaketen umfassen. Ein Datenpaket kann beispielsweise ein 2-Tupel aus Positionsdaten und Zeitstempel, ein 2-Tupel aus einer Kennung und Positionsdaten, ein 2-Tupel aus einer Kennung und Zeitstempel, oder ein 3-Tupel aus Positionsdaten, Zeitstempel und Kennung, umfassen. Insbesondere auf die Kennung wird weiter unten im Zusammenhang mit weiteren Ausgestaltungen noch genauer eingegangen.

Verfahrensgemäß ist vorgesehen, dass die Zeitsynchronisierung spätestens bei Abschuss des Effektors vorliegt. Insbesondere kann eine bereits bei Einrichtung des Waffensystems durchgeführte Zeitsynchronisierung verwendet werden. Alternativ kann die Zeitsynchronisierung auch unmittelbar vor Abschuss des Effektors, insbesondere erneut, durchgeführt werden. Denn liegt eine Zeitsynchronisierung nicht vor, oder ist diese bereits veraltet, ist vorgesehen, dass eine Zeitsynchronisierung vor, spätestens bei Abschuss des Effektors vorliegt, bzw. hergestellt wird, damit basierend auf dem Zeitstempel und der Effektor-Eigenzeit Positionsinformationen basierend insbesondere auf Laufzeitberechnungen ermittelt werden können. Die Zeitsynchronisierung umfasst dabei zumindest den betroffenen Effektor und zumindest die in einen Abschuss jeweils einbezogenen Waffensystemeinheiten.

Werden die Positionsdaten vor Abschuss des Effektors empfangen bzw. übertragen, so können diese zeitlich vor oder nach der Zeitsynchronisierung empfangen bzw. übertragen werden.

Mit dem Zeitsynchronisationssignal wird eine zeitliche Synchronisierung des Effektors mit der zumindest einen Waffensystemeinheit hergestellt. Empfängt der Effektor, beispielsweise von der Waffensystemeinheit, einen Zeitstempel zu gegebenen eineindeutig zugeordneten Positionsdaten, so kann der Effektor bzw. eine entsprechend eingerichtete Datenverarbeitungseinheit des Effektors, auf Grund der bestehenden Zeitsynchronisierung aus der zeitlichen Differenz zwischen dem durch den Zeitstempel definierten Zeitpunkt und dem Empfangszeitpunkt des Zeitstempels die Laufzeit für die Übermittlung des Zeitstempel-Signals, insbesondere eines entsprechenden Datenpakets, über die drahtlose Kommunikationsverbindung ermitteln. Wiederum basierend auf der ermittelten Laufzeit kann der Effektor, bzw. die Datenverarbeitungseinheit, aus der für die drahtlose Kommunikationsverbindung bekannten Ausbreitungsgeschwindigkeit bzw. Signalgeschwindigkeit, die Entfernung zwischen Effektor und der durch die Positionsdaten gegebenen bzw. definierten Position ermitteln. Die so ermittelte Entfernung kann der Effektor dann, ggf. zusammen mit den Positionsdaten, als Positionsinformationen verwenden. Insbesondere können die ermittelten Positionsinformationen insbesondere effektorseitig, zur Korrektur bzw. zur Überprüfung von Positionsdaten verwendet werden, die durch eine unabhängige Navigationseinheit, basierend beispielsweise auf Grundlage von Inertial-Navigation, ermittelt wurden. Mithin ist es mit dem vorgeschlagenen Verfahren möglich, insbesondere nach Abschuss des Effektors im Ernstfall genauere bzw. zuverlässigere Positionsdaten für den Effektor zu erhalten.

Das Verfahren zur Ermittlung von Positionsinformationen kann insbesondere in ein Navigationsverfahren eingebunden sein, wobei die durch das Verfahren ermittelten Positionsinformationen zur Korrektur, Bestätigung und/oder Verfeinerung der jeweiligen Effektornavigations-Position verwendet werden können.

In einer beispielhaften Ausgestaltung des Verfahrens kann der Effektor dazu eingerichtet sein, nach Zeitsynchronisierung erste Positionsdaten der die Abschusseinheit des Effektors bildenden Waffensystemeinheit und zweite Positionsdaten zumindest einer weiteren Waffensystemeinheit zu empfangen. Basierend auf den Positionssignalen und jeweils eineindeutig zugeordneten Zeitstempeln kann der Effektor nach dessen Abschuss Positionsinformationen basierend insbesondere auf Laufzeitberechnungen und Triangulation auf Grundlage der ersten und zweiten Positionsdaten ermitteln.

Der Effektor kann insbesondere so eingerichtet sein, dass dieser nach Abschuss wiederholt, insbesondere kontinuierlich bzw. intermittierend oder periodisch, Zeitstempel empfängt, für die eine eineindeutige Zuordnung zu Positionsdaten besteht oder, insbesondere durch den Effektor, ermittelt werden kann. Basierend auf dem wiederholten Empfang können entsprechend Positionsinformationen ermittelt werden, und basierend darauf kann eine wiederholte, kontinuierliche oder intermittierende bzw. periodische Korrektur oder Überprüfung der Effektor-eigenen Positionsdaten erfolgen.

Bei den Positionsdaten kann es sich beispielsweise um Geodaten handeln, die repräsentativ für die Absolutlage bezüglich der Erdoberfläche, d.h. einem der Erde zugeordneten Bezugssystem, sind. Ferner können die Positionsdaten repräsentativ für Lagekoordinaten sein, oder solche Lagekoordinaten umfassen, die eine Relativlage der den Positionsdaten zugeordneten Waffensystemeinheit in einem definierten Bezugssystem des Waffensystems angeben.

Allgemein sollen unter Positionsdaten insbesondere solche Daten verstanden werden, welche die Position einer den Positionsdaten zugeordneten Waffensystemeinheit in einem vom Waffensystem verwendeten oder in einem für jeweils beteiligte Einheiten des Waffensystems definierten Koordinatenbezugssystem angeben oder beschreiben.

Nach einer Ausgestaltung können Positionsdaten und Zeitstempel mit jeweils eineindeutiger Zuordnung von zwei oder mehreren, an verschiedenen Positionen befindlichen Waffensystemeinheiten empfangen werden. Entsprechend können für die zwei oder mehreren Waffensystemeinheiten entsprechende Positionsinformationen auf Grundlage von Laufzeitberechnungen, und sofern möglich bzw. erforderlich des Weiteren basierend Triangulation berechnet werden. Beispielsweise kann für jeden empfangenen Zeitstempel bei Verwendung mehrerer Waffensystemeinheiten die jeweilige Entfernung bzw. der jeweilige Abstand zwischen der Position des Effektors bei Empfang der Positionsdaten und der den Positionsdaten entsprechenden Position der Waffensystemeinheit ermittelt werden. Gestützt auf die ermittelten Entfernungen bzw. Abstände können Positionsinformationen dann basierend auf Triangulierung ermittelt bzw. berechnet werden.

In Ausgestaltungen können insbesondere Positionsdaten verwendet werden, die hinsichtlich der Zeitsynchronisation gleiche Zeitstempel aufweisen. Beispielsweise können die Waffensystemeinheiten zeitsynchron Zeitstempel übermitteln, wobei der Effektor die Positionsinformationsinformationen der zeitsynchronen Zeitstempel unmittelbar zur Triangulierung verwenden kann. Beispielsweise ist es möglich, dass der Effektor hinsichtlich der Zeitsynchronisation gleiche, jedoch zu unterschiedlichen Zeitpunkten empfangene Zeitstempel zu Datensätzen zusammenfasst und basierend auf solchen Datensätzen Positionsinformationen auf Grundlage von Triangulation ermittelt bzw. berechnet.

Unter Zeitstempeln, die hinsichtlich der Zeitsynchronisation gleich sind, sollen insbesondere Zeitstempel verstanden werden, die im zeitsynchronen Waffensystem im Wesentlichen zeitgleich erzeugt wurden. Beispielsweise können solche von unterschiedlichen Waffensystemeinheiten erzeugte Zeitstempel als zeitliche Signaturen jeweils den gleichen zeitsynchronen Sendezeitpunt enthalten. Mit anderen Worten können zu den Zeitstempeln korrespondierende Datensignale von den zwei oder mehreren Waffensystemeinheiten im Wesentlichen zeitgleich, d.h. zeitsynchron, gesendet werden. Der Begriff "im Wesentlichen" soll in diesem Zusammenhang insbesondere verstanden werden als "bis auf unwesentliche bzw. vernachlässigbare Unterschiede" zeitgleich oder identisch.

Nach einer Ausgestaltung kann vorgesehen sein, dass die eineindeutige Zuordnung zwischen Positionsdaten und jeweiligem Zeitstempel gegeben ist durch eine Verknüpfung von Positionsdaten und Zeitstempel bei deren Übermittlung. Beispielsweise können die Positionsdaten und der jeweilige Zeitstempel in einem gemeinsamen Datenpaket, insbesondere im Wesentlichen zeitgleich, übermittelt und empfangen werden, wobei der Zeitstempel einer zeitlichen Signatur des Sendezeitpunkts des Datenpakets entsprechen kann.

Auf der Grundlage einer eineindeutigen Zuordnung der Zeitstempel zu den Positionsdaten können die Positionsinformationen insbesondere über Laufzeitberechnungen ermittelt werden.

Eine Übermittlung von Positionsdaten und Zeitstempel in einem gemeinsamen Datenpaket, d.h. eine gemeinsame Übermittlung, ist insbesondere dann von Vorteil, wenn die Positionsdaten dem Effektor noch nicht bekannt sind, entweder, weil sich die Position, und damit die Positionsdaten, der zugeordneten Waffensystemeinheit geändert haben, oder weil die Positionsdaten der zugeordneten Waffensystemeinheit noch nicht empfangen bzw. übermittelt wurden.

In Ausgestaltungen kann vorgesehen sein, dass die eineindeutige Zuordnung zwischen Positionsdaten und jeweiligem Zeitstempel gegeben ist durch eine eineindeutige Kennung, die zusammen mit den Positionsdaten und/oder dem jeweiligen Zeitstempel empfangen bzw. übermittelt wird. Die Kennung kann dabei einer der Waffensystemeinheit im Waffensystem eindeutig zugeordneten Kennung entsprechen.

Hinsichtlich der Kennung, im Weiteren auch kurz ID genannt, ist es, wie weiter oben bereits beschrieben, beispielsweise möglich die Positionsdaten zusammen mit der Kennung als 2-Tupel zu übermitteln. Beispielsweise können solche 2-Tupel vor Abschuss an den Effektor übertragen werden bei bekannten Positionsdaten und insbesondere bei sich voraussichtlich nicht mehr ändernden Positionsdaten der Waffensystemeinheit. Auf Grundlage der ID kann der Effektor dann unter Verwendung nach Abschuss erhaltener bzw. an den Effektor übermittelter 2-Tupel umfassend die ID und einen Zeitstempel die zugeordneten Positionsinformationen ermitteln.

Sind die Positionsdaten vor Abschuss nicht bekannt, bzw. noch nicht übermittelt, so können diese nach Abschuss als 2-Tupel umfassend die ID und die Positionsdaten übertragen werden. Möglich ist in diesem Fall auch, dass ein 3-Tupel umfassend die ID, die Positionsdaten, und einen Zeitstempel übertragen wird, so dass der Effektor bereits auf Grundlage der ersten Übermittlung bzw. eines ersten Empfangs eines 3-Tupels Positionsinformationen ermitteln kann. Alternativ kann der Effektor nach Erhalt des 2-Tupels, und insbesondere bei unveränderten Positionsdaten der Waffensystemeinheit, ein oder mehrere weitere 2-Tupel erhalten, die die ID und einen jeweiligen Zeitstempel enthalten.

Die Verwendung einer Kennung ermöglicht insbesondere eine Verringerung der zu übertragenden Datenmenge bei wiederholter Übertragung eines Zeitstempels insbesondere bei unveränderten Positionsdaten der Waffensystemeinheit insoweit für eine Übermittlung einer Kennung weniger Bandbreite erforderlich ist als für die Übermittlung der jeweiligen Positionsdaten.

Ferner kann bei geeigneter Wahl der Kennung und vorheriger Übermittlung der Kennung und Registrierung am Effektor eine verbesserte Übertragungssicherheit erreicht werden, insbesondere wenn der Effektor so eingerichtet ist, dass dieser nur Positionsdaten und/oder Zeitstempel von Kennungen akzeptiert, die vor Abschuss am Effektor registriert wurden. Eine weitere Verbesserung der Übertragungssicherheit kann erreicht werden, wenn die ID und/oder Positionsdaten und/oder Zeitstempel verschlüsselt übertragen werden.

In Ausführungsbeispielen mit mehreren Waffensystemeinheiten kann vorgesehen sein, dass erste Positionsdaten und/oder Zeitstempel einer ersten Waffensystemeinheit mit einer eineindeutig zugeordneten ersten Kennung übermittelt werden, und dass zweite Positionsdaten und/oder Zeitstempel einer zweiten Waffensystemeinheit mit einer eineindeutig zugeordneten zweiten Kennung übermittelt werden. Entsprechende weitere Kennungen können verwendet werden, wenn drei oder mehr Waffensystemeinheiten zur Ermittlung der Positionsinformationen herangezogen werden.

Nach Ausgestaltungen kann vorgesehen sein, dass die Positionsdaten zumindest teilweise vor Abschuss des Effektors vom Effektor empfangen bzw. an diesen übermittelt werden, und den Positionsdaten jeweils eineindeutig zugeordnete Zeitstempel nach Abschuss des Effektors empfangen bzw. übermittelt werden. Insbesondere bietet sich eine solche Vorgehensweise, wie bereits beschrieben beispielsweise an, wenn die Positionsdaten der Waffensystemeinheiten während der Flugzeit des Effektors nach dessen Abschuss unverändert sind bzw. bleiben.

In Ausgestaltungen kann vorgesehen sein, dass die Positionsdaten mit einem Zeitstempel in eineindeutiger Zuordnung zumindest teilweise nach Abschuss des Effektors empfangen bzw. übertragen werden. Eine solche Vorgehensweise bietet sich, wie bereits beschrieben, beispielsweise an bei zwischenzeitlicher Veränderung Positionsdaten nach Abschuss, bzw. bei zuvor, d.h. vor Abschuss, noch nicht empfangenen/übermittelten Positionsdaten. Ebenfalls kann diese Vorgehensweise verwendet werden, wenn neue, insbesondere vorher noch nicht registrierte, jedoch zeitsynchrone Waffensystemeinheiten, insbesondere nach Abschuss des Effektors, in das Verfahren zur Ermittlung von Positionsinformationen eingebunden werden.

Nach einer Ausgestaltung kann vorgesehen sein, dass der Effektor dazu eingerichtet ist, Positionsdaten und/oder Zeitstempel in jeweils eineindeutiger Zuordnung nach Abschuss des Effektors von solchen, insbesondere ausgewählten, beispielsweise vorab ausgewählten, Waffensystemeinheiten des Waffensystems zu empfangen, welche zumindest abschnittsweise längs der Flugbahn des Effektors in (Daten-)Übertragungsreichweite mit dem Effektor gelangen. Entsprechend können die Waffensystemeinheiten dazu eingerichtet sein, Daten an den Effektor zu übertragen, wenn dieser auf seiner Flugbahn in (Daten-)Übertragungsreichweite zur Waffensystemeinheit gelangt. Insbesondere können bei Abschuss noch nicht in (Daten-)Übertragungsreichweite liegende Waffensystemeinheiten bereits vor Abschuss am Effektor registriert werden. Die Auswahl solcher bzw. aller (voraussichtlich) längs der Flugbahn des Effektors nach Abschuss einzubeziehenden Waffensystemeinheiten kann beispielsweise auf Grundlage einer Simulation der Flugbahn des Effektors erfolgten.

Beispielsweise können Waffensystemeinheiten ausgewählt werden bzw. sein, für welche die Wahrscheinlichkeit zur drahtlosen Kommunikation mit dem Effektor nach dessen Abschuss zumindest abschnittsweise längs der Flugbahn über einem vorgegebenen Schwellenwert liegt. Hier können insbesondere Vorabkenntnisse zu Position der Waffensystemeinheiten relativ zum Zielobjekt bzw. Zielort des Effektors verwendet werden.

Insbesondere können zur Ermittlung der Positionsinformationen nach Abschuss des Effektors Positionsdaten und/oder Zeitstempel solcher Waffensystemeinheiten verwendet werden, für welche die Wahrscheinlichkeit zur drahtlosen Kommunikation mit dem Effektor zumindest abschnittsweise längs der Flugbahn über einem vorgegebenen Schwellenwert liegt.

Die Wahrscheinlichkeit kann beispielsweise basierend auf dem Verlauf einer simulierten Flugbahn des Effektors ermittelt werden. Insbesondere kann die Wahrscheinlichkeit oder eine die Wahrscheinlichkeit beschreibende Größe, aus dem Abstand der jeweiligen Waffensystemeinheit von der simulierten Flugbahn, und ggf. unter Berücksichtigung der, insbesondere geschätzten, lokalen (Daten-)Übertragungsreichweite der jeweils verwendeten Datenverbindung, z.B. basierend auf Radio- bzw. Funkwellen, Lichtwellen, insbesondere LASER, usw., ermittelt oder berechnet werden.

Ergibt sich beispielsweise für eine Waffensystemeinheit des Waffensystems eine über einen gegebenen Schwellenwert liegende Wahrscheinlichkeit für eine Drahtloskommunikationsmöglichkeit mit dem Effektor auf zumindest einem Segment der simulierten Flugbahn, so kann die jeweilige Waffensystemeinheit ausgewählt, und insbesondere am Effektor registriert, werden. Dem Effektor kann nach Auswahl insbesondere die der ausgewählten Waffensystemeinheit eindeutig zugeordnete ID übermittelt werden, wodurch die Waffensystemeinheit beim Effektor registriert werden kann. Auf Grundlage der Registrierung, kann der Effektor bei Erhalt eines Datenpakets mit der registrierten Kennung entsprechende Positionsdaten und/oder Zeitstempel zur Ermittlung der Positionsinformationen heranziehen.

Ergeben sich basierend auf den Wahrscheinlichkeiten geeignete Waffensystemeinheiten für eine Datenübertragung, so kann dies den jeweiligen Waffensystemeinheiten durch drahtgebundene Kommunikation und/oder Drahtloskommunikation mitgeteilt werden, beispielsweise basierend auf einem Aktivierungssignal. Mit dem Aktivierungssignal kann einer jeweiligen Waffensystemeinheit ferner ein Zeitfenster mitgeteilt werden, in welchem eine Drahtloskommunikation mit dem Effektor voraussichtlich möglich sein wird. Das Zeitfenster kann beispielsweise basierend auf einer Flugkörpersimulation zur Simulation der Position des Effektors längs der Flugbahn ermittelt werden. Das Zeitfenster kann insbesondere derart bestimmt sein, dass die Waffensystemeinheit lediglich zu solchen Zeitpunkten bzw. Zeitintervallen Anklopfsignale (insbesondere Ping-Signale) oder Uplink-Signale sendet, in welchen ein auf Grundlage von Daten zur simulierten Flugbahn und der Position der Waffensystemeinheit ermittelter Abstand zwischen Effektor und Waffensystemeinheit im Bereich der (Daten-)Übertragungsreichweite liegt.

Sofern eine oder mehrere Waffensystemeinheiten nicht stationär ist bzw. sind, d.h. sofern eine oder mehrere Waffensystemeinheiten während der Flugdauer des Effektors bewegt werden (sollen), kann die Auswahl ferner auf eine Simulation der Position des oder der jeweiligen Waffensystemeinheiten gestützt werden. Ergibt beispielsweise eine Simulation der Position einer Waffensystemeinheit, dass diese längs der Flugbahn des Effektors nach Wahrscheinlichkeit nicht in Datenübertragungsreichweite liegen wird, kann zur Verringerung der Möglichkeit einer feindlichen Aufklärung auf eine Auswahl dieser Waffensystemeinheit verzichtet werden. Umgekehrt kann für den Fall, dass die Waffensystemeinheit sich während der Flugdauer in eine zur Datenübertragung geeignete Position begibt, diese Waffensystemeinheit ausgewählt werden, wobei der Waffensystemeinheit ein entsprechendes Zeit- und/oder Ortsfenster zur Datenkommunikation mit dem Effektor mitgeteilt werden kann, beispielsweise durch einen Kontrollrechner (z.B. eines TOC) des Waffensystems.

Durch eine Auswahl lediglich derjenigen Waffensystemeinheiten, die nach Wahrscheinlichkeit in Datenübertragungsreichweite mit dem Effektor gelangen, kann für die Waffensystemeinheiten insgesamt insbesondere das Risiko einer feindlichen Aufklärung verringert werden, denn nicht ausgewählte Waffensystemeinheiten sind hinsichtlich einer Datenkommunikation mit dem Effektor inaktiv bzw. stumm. Insbesondere bei Nichtauswahl einer Waffensystemeinheit, beispielsweise bei aktiver Nichtauswahl basierend auf einen entsprechenden Nichtauswahlsignal oder bei passiver Nichtauswahl bei Fehlen eines Aktivierungssignals, zeigt die Waffensystemeinheit keine Sendeaktivitäten hinsichtlich des jeweiligen Effektors, so dass insoweit das Risiko für eine feindliche Aufklärung vermindert ist.

In einer weiteren Ausgestaltung der Erfindung ist ein Effektor, insbesondere ein Flugkörper, besonders bevorzugt ein Lenkflugkörper, vorgesehen. Der Effektor ist eingerichtet zum Abschuss von einer Abschusseinheit (engl.: Launcher) eines Waffensystems.

Der Effektor umfasst eine elektronische Datenverarbeitungseinheit mit einem Speicher. Der Speicher umfasst Instruktionen, die bei Ausführung durch die Datenverarbeitungseinheit ein effektorseitiges Verfahren mit den Merkmalen nach einer der hierin beschriebenen Ausgestaltungen bewirken. Insbesondere kann die Datenverarbeitungseinheit zur Ausführung eines entsprechenden Verfahrens eingerichtet sein. Der Speicher kann insbesondere durch die elektronische Datenverarbeitungseinheit lesbare, insbesondere computerlesbare, Instruktionen speichern, die bei Ausführung durch die Datenverarbeitungseinheit, insbesondere eine Rechnereinheit oder computer-basierte Recheneinheit, ein entsprechendes Verfahren bewirkt.

Bzgl. des effektorseitigen Verfahrens wäre es auch denkbar, dass der Effektor Zeitstempel an die zumindest eine vom Effektor verschiedene, mobile oder stationäre Waffensystemeinheit sendet und Positionsinformationen über die zumindest eine Waffensystemeinheit vorzugsweise aus Laufzeitberechnungen ermittelt werden.

Weitere Ausgestaltungen der Erfindung betreffen ein zum effektorseitigen Verfahren korrespondierendes Verfahren zum Betrieb des Waffensystems und der Waffensystemeinheiten in Verbindung mit der Ermittlung von Positionsinformationen für den Effektor nach dessen Abschuss von einer Abschusseinheit. Verfahrensschritte, die effektorseitig ein Empfangen von Daten und dgl. betreffen, können im Rahmen der Erfindung waffensystemseitig entsprechend als Verfahrensschritte zum Übermitteln von Daten usw. umgesetzt werden, und umgekehrt.

Insbesondere betreffen Ausgestaltungen der Erfindung ein computer-implementiertes Verfahren zur Ermittlung von Positionsinformationen für einen Effektor nach Abschuss von einer Abschusseinheit eines Waffensystems, wobei das Waffensystem den Effektor und zumindest eine vom Effektor verschiedene mobile oder stationäre Waffensystemeinheit umfasst. Das vorgeschlagene Verfahren umfasst insbesondere die folgenden Schritte:
- Übermitteln eines Zeitsynchronisationssignals an den Effektor und die zumindest eine Waffensystemeinheit zur Zeitsynchronisierung von Effektor und Waffensystemeinheit derart, dass Effektor und die zumindest eine Waffensystemeinheit spätestens bei Abschuss des Effektors zeitlich synchronisiert sind;
- Übermitteln von Positionsdaten zumindest einer der zumindest einen zeitsynchronen Waffensystemeinheit an den Effektor;
- Übermitteln eines, insbesondere von, für, oder durch die Waffensystemeinheit erzeugten, Zeitstempels in eineindeutiger Zuordnung zu den Positionsdaten über eine drahtlose Kommunikationsverbindung an den Effektor nach dessen Abschuss, derart, dass für den Effektor die Positionsinformationen basierend auf dem Zeitstempel, der Effektor-Eigenzeit bei Empfang des Zeitstempels, und den dem Zeitstempel eineindeutig zugeordneten Positionsdaten ermittelbar sind.

In Ausgestaltungen kann vorgesehen sein, dass die Positionsinformationen für den Effektor vorzugsweise basierend auf Laufzeitberechnungen ermittelbar sind.

In Ausgestaltungen kann das Verfahren insbesondere den Schritt des Erzeugens eines Zeitsynchronisationssignals zur Zeitsynchronisierung des Waffensystems, insbesondere des Effektors und der zumindest einen Waffensystemeinheit, umfassen. Das erzeugte Zeitsynchronisierungssignal kann, insbesondere bis spätestens vor Abschuss des Effektors, an den Effektor und die zumindest eine weitere Waffensystemeinheit übermittelt werden. Basierend auf dem Zeitsynchronisationssignal können nachfolgende Datenpakete mit der jeweils vorherrschenden synchronisierten Zeit als Signatur an den Effektor übermittelt werden.

Das vorweg vorgeschlagene Verfahren kann aus (Waffen-)Systemsicht insbesondere den Betrieb einer zum Abschuss des Effektors vorgesehenen Waffensystemeinheit, bzw. einer dieser Waffeneinheit zugeordneten Kommandostation, insbesondere ein sog. Tactical Operations Center, mit einer oder mehreren Rechnereinheiten zur Steuerung und/oder Überwachung des Waffensystems betreffen.

In Ausgestaltungen können die Positionsdaten und/oder Zeitstempel mit jeweils eineindeutiger Zuordnung zumindest teilweise von der jeweiligen Waffensystemeinheit selbst oder von einer mit der Waffeneinheit datentechnisch verbundenen Kontrolleinheit an den Effektor übertragen werden. Insbesondere ist es möglich, dass die Waffensystemeinheit Positionsdaten und/oder Zeitstempel kontinuierlich oder intermittierend bzw. periodisch übertragen werden. Damit kann insbesondere eine kontinuierliche, intermittierende, bzw. periodische usw. Korrektur oder Überprüfung der Position des Effektors erfolgen.

Nach einer Ausgestaltung können in die Ermittlung der Positionsinformationen zwei oder mehrere verschiedene Waffensystemeinheiten eingebunden sein. Insbesondere können für zwei oder mehrere an verschiedenen Positionen, z.B. Orten mit unterschiedlichen Orts- oder Lagekoordinaten, insbesondere an verschiedenen geografischen Orten, befindliche Waffensystemeinheiten verfügbare oder ermittelte Positionsdaten korrespondierende Zeitstempel mit jeweils eineindeutiger Zuordnung zu den jeweiligen Positionsdaten an den Effektor zum Zwecke der Ermittlung der Positionsinformationen übertragen werden. Basierend auf Positionsinformationen, die der Effektor z.B. aus Laufzeitberechnungen ermittelt, kann die Position des Effektors, insbesondere durch Triangulation, ermittelt bzw. korrigiert oder überprüft werden.

In Ausgestaltungen kann vorgesehen sein, dass die Übertragung der Zeitstempel der an verschiedenen Positionen befindlichen zwei oder mehreren Waffensystemeinheiten zeitsynchron erfolgt. Unter dem Begriff zeitsynchron soll, wie oben bereits erläutert, insbesondere verstanden werden, dass die Waffeneinheiten den Zeitstempel gleichzeitig erzeugen und übertragen. Dies ist insbesondere gestützt auf die im Waffensystem bestehende Zeitsynchronisation der an dem vorgeschlagenen Verfahren beteiligten Waffensystemeinheiten möglich. Zwar können die zeitsynchron übermittelten Zeitstempel wegen Laufzeitunterschieden zu unterschiedlichen Zeitpunkten am Effektor empfangen werden, jedoch ermöglichen die mit zu den Zeitstempeln eineindeutig korrespondierenden zeitsynchronen Positionsdaten eine unmittelbare Verwendung bei einer Triangulation zur Ermittlung der Positionsinformationen. Bei ausreichender Anzahl an beteiligen Waffensystemeinheiten kann der Effektor dessen absolute bzw. relative Lage aus den jeweils ermittelten Positionsdateninformationen ermitteln.

In Ausgestaltungen übermittelt zumindest eine der zumindest einen Waffensystemeinheiten nach Abschuss des Effektors wiederholt Zeitstempel mit eineindeutiger Zuordnung zu den (jeweiligen) Positionsdaten der Waffensystemeinheit über die drahtlose Kommunikationsverbindung an den Effektor. Insbesondere kann die Übermittlung der Zeitstempel periodisch, insbesondere in regelmäßigen Zeitabständen erfolgen. In Ausgestaltungen kann vorgesehen sein, dass alle beteiligten, und in Datenübertragungsreichweite befindlichen Waffensystemeinheiten kontinuierlich, insbesondere periodisch, entsprechende Zeitstempel an den Effektor übermitteln. Die Übermittlung der Zeitstempel kann dabei insbesondere zeitsynchron getaktet sein.

In Ausgestaltungen können bei einer Veränderung der Positionsdaten einer der zumindest einen Waffensystemeinheit nach Abschuss des Effektors die veränderten Positionsdaten und ein den veränderten Positionsdaten eineindeutig zugeordneter Zeitstempel übertragen werden. Ändern sich die Positionsdaten der Waffensystemeinheit nicht, reicht es für nachfolgende Übertragungen lediglich den Zeitstempel, ggf. mit einer entsprechenden Kennung zu übermitteln, vorausgesetzt die zuvor übermittelten Positionsdaten sind mit derselben Kennung verknüpft.

Insbesondere kann in Ausgestaltungen vorgesehen sein, dass bei unveränderten Positionsdaten einer Waffensystemeinheit in aufeinanderfolgenden Übertragungen jeweils lediglich ein Zeitstempel in eindeutiger Zuordnung zu den unveränderten Positionsdaten an den Effektor übertragen wird. Die eindeutige Zuordnung kann, wie bereits beschrieben, beispielsweise durch eine mit den Positionsdaten und dem Zeitstempel übermittelte Kennung gegeben sein. Durch eine solche Übertragung kann die Übertragungshäufigkeit von Positionsdaten reduziert werden, mithin auch die Wahrscheinlichkeit einer feindlichen Aufklärung basierend auf abgefangenen Positionsdaten. Ferner kann bei geeignet gewählter Kennung die zu übermittelnde Datenmenge verringert werden.

In Ausgestaltungen ist vorgesehen, dass an den Effektor ein Anklopfsignal übermittelt wird, und dass zumindest eine zeitlich erstmalige Übermittlung der Positionsdaten und/oder des Zeitstempels an den Effektor nur bei erfolgreichem Anklopfsignal an den Effektor erfolgt. Unter dem Begriff "erfolgreichem Anklopfsignal" soll insbesondere verstanden werden, dass die übertragende Einheit die Positionsdaten und/oder Zeitstempel über eine basierend auf das Anklopfsignal (insbesondere ein sog. Pingsignal) erstellte Datenübertragungsverbindung an den Effektor übertragen kann. Über ein entsprechendes Anklopfsignal können Waffensystemeinheiten, die zunächst nicht in Übertragungsreichweite sind, im Verlauf der Flugbahn des Effektors jedoch in Übertragungsreichweite gelangen, jeweilige Datenübertragungsverbindungen mit dem Effektor herstellen bzw. verhandeln.

In Ausgestaltungen kann vorgesehen sein, dass die eineindeutige Zuordnung zwischen Positionsdaten und Zeitstempel dadurch erfolgt, dass Positionsdaten und zugeordneter Zeitstempel zusammen an den Effektor übermittelt werden, beispielsweise in einem gemeinsamen Datensatz bzw. in einer gemeinsamen Datenübertragung.

Ferner ist es in Ausgestaltungen möglich, dass zur Bereitstellung einer eineindeutigen Zuordnung die Positionsdaten und/oder der jeweilige Zeitstempel zusammen mit einer jeweiligen Kennung an den Effektor übermittelt werden.

Beispielsweise können, wie bereits beschrieben, Kennung und Positionsdaten bzw. Kennung und Zeitstempel als 2-Tupel in einer gemeinsamen Datenübertragung, z.B. in einem Datenpaket, übermittelt werden. Auch ist es möglich, Kennung, Positionsdaten und Zeitstempel in einer gemeinsamen Datenübertragung, beispielsweise als 3-Tupel in einem gemeinsamen Datensatz, zu Übermitteln. Letztere Übertragungsvariante kann insbesondere verwendet werden, wenn dem Effektor entweder Kennung oder Position (noch) nicht bekannt sind, beispielsweise bei Positionsänderungen oder bei Waffensystemeinheiten, die dem Effektor (noch) nicht bekannt sind, und/oder die erste im Verlauf der Flugbahn in Datenübertragungsreichweite gelangen.

Vorzugsweise ist die Kennung in eindeutiger Weise der Waffensystemeinheit zugeordnet. Insbesondere ist es möglich eine im Datennetz des Waffensystems ohnehin bereits verfügbare Kennung für die Waffensystemeinheit(en) im Waffensystem zu verwenden.

Nach einer Ausgestaltung kann vorgesehen sein, dass lediglich solche Waffensystemeinheiten für eine Übertragung von Positionsdaten und/oder Zeitstempel an den Effektor ausgewählt werden, welche zumindest abschnittsweise längs der (voraussichtlichen, insbesondere simulierten) Flugbahn des Effektors in (Daten-)Übertragungsreichweite mit dem Effektor gelangen. Wie bereits erwähnt, kann ein solches Vorgehen zur Verringerung des Risikos einer feindlichen Aufklärung von Vorteil sein.

Die Auswahl der Waffensystemeinheiten kann dabei auf Grundlage einer Simulation der Flugbahn des Effektors erfolgen.

Insbesondere kann die Möglichkeit der Auswahl bestimmter Waffensystemeinheiten derart implementiert sein, dass ein Schwellenwert vorgegeben wird, und eine Waffensystemeinheit dann ausgewählt wird, wenn für die Waffensystemeinheit die Wahrscheinlichkeit zur drahtlosen Kommunikation mit dem Effektor zumindest abschnittsweise längs der Flugbahn über dem Schwellenwert liegt. Insbesondere kann der Schwellenwert so ausgewählt werden, dass eine drahtlose Kommunikationsverbindung mit überwiegender Wahrscheinlichkeit (z.B. mehr als 80% oder 90%) zwischen Effektor und Waffensystemeinheit zustande kommen wird.

Zur Ermittlung der Wahrscheinlichkeit können beispielsweise Simulationsdaten des Flugverlaufs des Effektors verwendet werden, sowie voraussichtliche Datenübertragungsreichweiten in jeweils relevanten Abschnitten des Flugverlaufs.

Insbesondere ist es möglich, nur solche Waffensystemeinheiten auszuwählen, die mit Sicherheit (z.B. 100%) eine Kommunikationsverbindung mit dem Effektor herstellen können.

Nach einer weiteren Ausgestaltung der Erfindung ist eine Rechnereinheit, insbesondere Kommandorechnereinheit, zur Überwachung und Steuerung einer zum Abschuss eines Effektors ausgebildeten Abschusseinheit eines Waffensystems und/oder eines Effektors, vorgesehen.

Die vorgeschlagene Rechnereinheit umfasst insbesondere eine elektronische Datenverarbeitungseinheit und einen elektronischen Datenspeicher. Der Datenspeicher umfasst insbesondere Instruktionen, die bei Ausführung durch die Datenverarbeitungseinheit ein Verfahren mit den Merkmalen nach einem der hierin beschriebenen Verfahren bzw. Ausgestaltungen derselben bewirken.

Bei der Rechnereinheit kann es sich beispielsweise um eine Kommandorechnereinheit, insbesondere eines sog. Tactical Operations Centers (TOC), um eine Rechnereinheit einer Abschusseinrichtung, insbesondere eines sog. Launchers, und/oder eine Rechnereinheit eines Effektors handeln.

Insbesondere kann die Rechnereinheit mehrere, bezüglich ihrer Position in einem Datennetzwerk verteilt angeordnete Komponenten des Waffensystems umfassen, die beispielsweise auf unterschiedlichen Waffensystemeinheiten implementiert sein können, und die durch eine kabelgebundene oder kabellose Datenübertragungsverbindung zum Zwecke der Datenübertragung miteinander verbunden oder verbindbar sind.

Die Kommandorechnereinheit kann eingerichtet sein zur Überwachung und Steuerung einer zum Abschuss eines Effektors ausgebildeten Abschusseinheit eines Waffensystems, beispielsweise eines oder mehrerer Launcher.

Nach einer weiteren erfindungsgemäßen Ausgestaltung ist ein Waffensystem vorgesehen, welches einen Effektor nach einer der hierin beschriebenen Ausgestaltungen und zumindest eine Rechnereinheit nach einer der hierin beschriebenen Ausgestaltungen umfasst.

Das Waffensystem kann als Waffensystemeinheit/en insbesondere eine oder mehrere Abschusseinheiten (Launcher), eine oder mehrere Drohnen, einen oder mehrere Flugkörper, ein oder mehrere Flugzeuge, ein oder mehrere Fahrzeuge usw., umfassen.

Beispielhafte Ausgestaltungen der Erfindung werden nachfolgend anhand der anhängenden Figuren beschrieben. Es zeigen:
- FIG. 1: beispielhaft ein Waffensystem, das eingerichtet ist zur Ermittlung von Positionsinformationen für einen Effektor nach einem hierin beschriebenen Verfahren;
- FIG. 2: das Waffensystem in einer ersten Phase nach Abschuss des Effektors,
- FIG. 3: das Waffensystem in einer zweiten Phase nach Abschuss des Effektors,
- FIG. 4: beispielhaft ein effektorseitiges Ablaufdiagramm eines Verfahrens zur Ermittlung von Positionsinformationen;
- FIG. 5: beispielhaft ein kontrollrechnerseitiges Ablaufdiagramm eines Verfahrens zur Ermittlung von Positionsinformationen;
- FIG. 6: ein beispielhaftes Übertragungsdiagramm in einem Verfahren zur Ermittlung von Positionsinformationen.

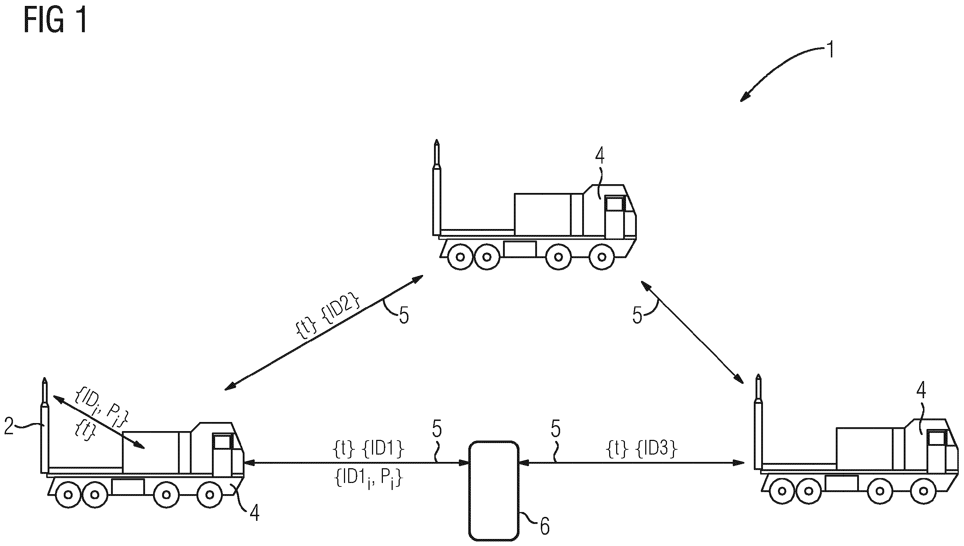

FIG. 1 zeigt beispielhaft ein Waffensystem 1, wobei das Waffensystem 1 zur Ermittlung von Positionsinformationen für einem Effektor 2 nach einem hierin beschriebenen Verfahren eingerichtet ist.

Konkret umfasst das in FIG. 1 beispielhaft gezeigte Waffensystem 1 als Waffensystemeinheiten einen Effektor 2, beispielsweise ein Lenkflugkörper, und eine erste Abschusseinheit 3, die zur Durchführung eines erfindungsgemäßen Verfahrens eingerichtet sind. Ferner umfasst das Waffensystem 1 beispielhaft zur Verdeutlichung des Verfahrens zwei weitere zweite Abschusseinheiten 4. Die weiteren Abschusseinheiten 4 können anlog zur ersten Abschusseinheit 3 ausgebildet sein, und entsprechend eingerichtete, nicht weiter bezeichnete Effektoren umfassen.

Die Abschusseinheiten 3 und 4, auch Launcher genannt, sind zum gegenseitigen Datenaustausch untereinander über eine Datenkommunikationsverbindung 5 miteinander verbunden (siehe Doppelpfeile in FIG. 1 bis 3).

Die Abschusseinheiten 3 und 4 sowie der Effektor 2 umfassen jeweils zugeordnete Datenübertragungseinheiten (nicht gezeigt), die insbesondere auch nach Abschuss des Effektors 2 von der Abschusseinheit bei geeigneter Übertragungsreichweite eine Datenkommunikationsverbindung zwischen Effektor 2 und Abschusseinheiten 3, 4 ermöglichen.

Zur Durchführung von Ausgestaltungen des erfindungsgemäß vorgeschlagenen Verfahrens zur Ermittlung von Positionsinformationen ist die Datenkommunikationsverbindung 5 zwischen Effektor 2 und den Abschusseinheiten 3, 4 zumindest unidirektional eingerichtet, so dass, eine ausreichende Datenübertragungsreichweite vorausgesetzt, zumindest eine Datenübermittlung von Abschusseinheit 3, 4 zu Effektor 2 hin möglich ist.

FIG. 1 zeigt das Waffensystem 1 in einer Phase vor Abschuss des Effektors 2. In dieser Phase kann das Waffensystem 1 eine Zeitsynchronisation aller der ins Waffensystem eingebundenen Einheiten 2, 3, 4 durchführen. Die Zeitsynchronisation kann beispielsweise durch eine Rechnereinheit des taktischen Kontrollzentrums 6 (engl. auch TOC: Tactical Operations Center) durchgeführt werden, indem das TOC 6 beispielsweise Zeitsynchronisationssignale {t} an die zur Zeitsynchronisation vorgesehenen Einheiten senden kann. Alternativ kann die Zeitsynchronisation auch, zumindest teilweise, von einer Abschusseinheit 3, 4, oder einer anderen Einheit des Waffensystems ausgehen. Entsprechendes gilt für die nachfolgend beschriebenen Verfahrensschritte insbesondere insoweit diese eine Ausführung auf verteilten Rechnereinheiten erlauben.

Vor Abschuss des Effektors 2 können in der in FIG. 1 gezeigten Phase den Waffensystemeinheiten 3, 4 eindeutige Kennungen ID1, ID2, ID3 zugeordnet werden. Die Kennungen ID1 bis ID3 können in dieser Phase zusammen mit Positionsdaten P1, P2, P3 der jeweiligen Abschusseinheiten 3, 4 an den zum Abschuss vorgesehenen Effektor 2 übertragen werden, derart, dass die Positionsdaten P1 bis P3 der jeweiligen Kennung ID1 bis ID 2 jeweils eindeutig zugeordnet sind.

Dies kann beispielsweise dadurch erfolgen, dass die Positionsdaten P1, P2, P3 und jeweilige Kennungen ID1, ID2, ID3 jeweils zusammen in einem Datenpaket als 2-Tupel übertragen werden: {ID1, P1}; {ID2, P2}; {ID3, P3}. Die 2-Tupel können, wie im gezeigten Beispiel, vom TOC 6, über die Abschusseinheit 3 an den Effektor 2 übertragen werden. Alternativ können auch die jeweiligen Abschusseinheiten 3, 4 entsprechende 2-Tupel-Datenpakete an die anderen Waffensystemeinheiten übermitteln. Datenpakete sind der Übersicht halber insbesondere durch geschweifte Klammern gekennzeichnet.

Vor Abschuss des Effektors 2 kennt dieser mithin die den Waffensystemeinheiten 3, 4 zugeordneten IDs sowie die mit den IDs verknüpften Positionsdaten P.

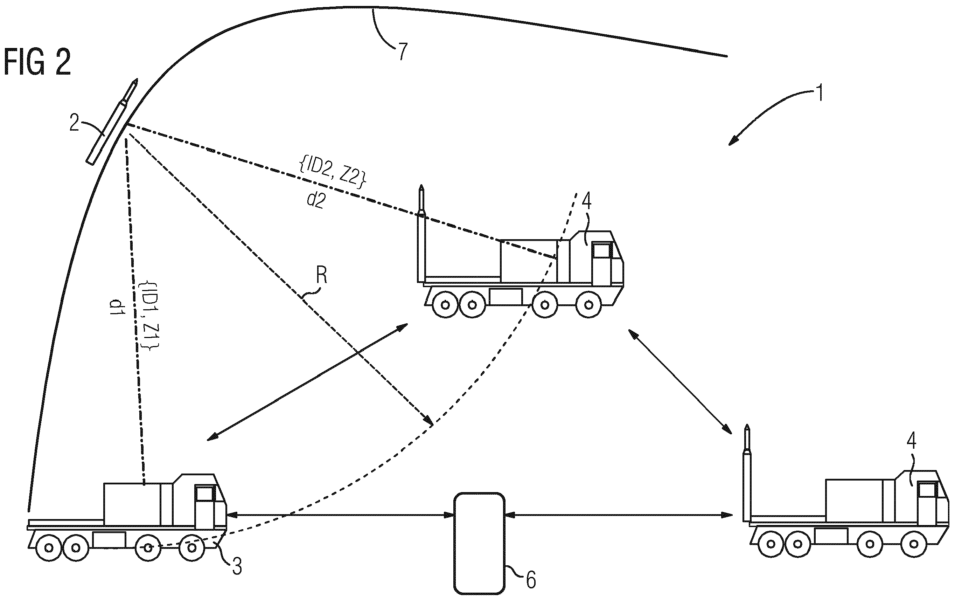

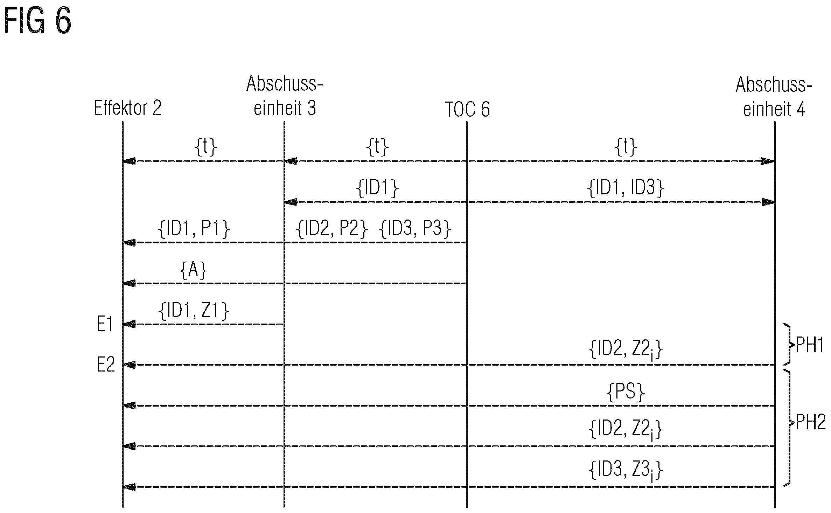

FIG. 2 zeigt das Waffensystem 1 in einer ersten Phase PH1 nach Abschuss des Effektors 2. Der Abschuss des Effektors 2 kann vom TOC 6 durch ein entsprechendes Abschusssignal A (siehe FIG. 6) eingeleitet bzw. kommandiert werden/sein.

Nach Abschuss des Effektors 2 kann dieser beispielsweise gestützt auf eine Trägheitsnavigation, ausgeführt beispielsweise durch eine effektorseitige Rechnereinheit, unter anderem die Position des Effektors 2 bezüglich eines vorgegebenen Bezugssystems ermitteln.

Insbesondere zur Überprüfung und/oder zur Verbesserung der Genauigkeit der ermittelten Position durch Trägheitsnavigation kann das Waffensystem entsprechend dem erfindungsgemäßen Verfahren, unabhängig von der Trägheitsnavigation zusätzliche Positionsinformationen ermitteln, worauf im Folgenden näher eingegangen wird.

Nach Abschuss {A} des Effektors 2 werden an diesen durch die mit dem Effektor in Datenübertragungsreichweite R gelegenen Waffensystemeinheiten 3, 4, im vorliegenden Fall die Abschusseinheit 3 und eine der Abschusseinheiten 4, jeweilige Zeitstempel Z in eineindeutiger Zuordnung zu den Positionsdaten P1, P2 der jeweiligen Abschusseinheiten 3, 4 übertragen.

Die eineindeutige Zuordnung wird im vorliegenden Fall dadurch erreicht, dass der Effektor 2 bereits die jeweiligen IDs und zugeordnete Positionsdaten P kennt, und die Zeitstempel Z mit jeweiligen Datenpaketen zusammen mit den IDs übertagen werden.

Beispielsweise überträgt im vorliegenden Beispiel die Abschusseinheit 3 das Datenpaket {ID1, Z1ᵢ}, mit i=1, 2, 3, ... (wobei der Koeffizient i wiederholte bzw. periodische Übermittlungen von Datenpaketen kennzeichnet) und die in der ersten Phase PH1 in Übertragungsreichweite R mit dem Effektor befindliche Abschusseinheit 4 das Datenpaket {ID2, Z2ᵢ}, mit i=1, 2, 3, .... Der Effektor 2 empfängt diese Datenpakete zu jeweiligen Empfangszeitpunkten E1 und E2 in der mit dem Waffensystem 1 zeitsynchronen Effektor-Eigenzeit.

Wegen der im Waffensystem 1 bestehenden Zeitsynchronisation, und der eineindeutigen Zuordnung zwischen Zeitstempeln Z1ᵢ, Z2ᵢ und Positionsdaten P1, P2 kann der Effektor 2 aus der jeweiligen Laufzeitdifferenz der Datenübertragung, d.h. Δ(E1, Z1ᵢ) und Δ(E1, Z2ᵢ) und der bekannten Signalgeschwindigkeit der Datenübertragung die Abstände d1 und d2 zur jeweiligen Abschusseinheit 3, 4 ermitteln.

Gestützt auf die Abstände d1, d2 und den diesen eineindeutig zugeordneten Positionsdaten P1 und P2 kann der Effektor 2 beispielsweise durch Triangulation Positionsinformationen ermitteln, die zur Überprüfung bzw. Korrektur der aus Trägheitsnavigation erhaltenen Position verwendet werden können. Auch kann der Effektor 2 bei ausreichender Datenlage aus den Positionsinformationen die Position des Effektors 2 selbst ermitteln.

Die Übermittlung der Zeitstempel Z1ᵢ und Z2ᵢ kann zeitsynchron erfolgen. Ferner kann die Übermittlung der Zeitstempel Z, zumindest so lange die jeweilige Abschusseinheit 3, 4, in Übertragungsreichweite R ist, periodisch erfolgen, so dass der Effektor im Wesentlichen kontinuierlich Positionsinformationen unabhängig von der Trägheitsnavigation ermitteln kann (eine solche periodische bzw. kontinuierliche Übertragung ist hierin für das Ausführungsbeispiel durch den Koeffizienten i angedeutet).

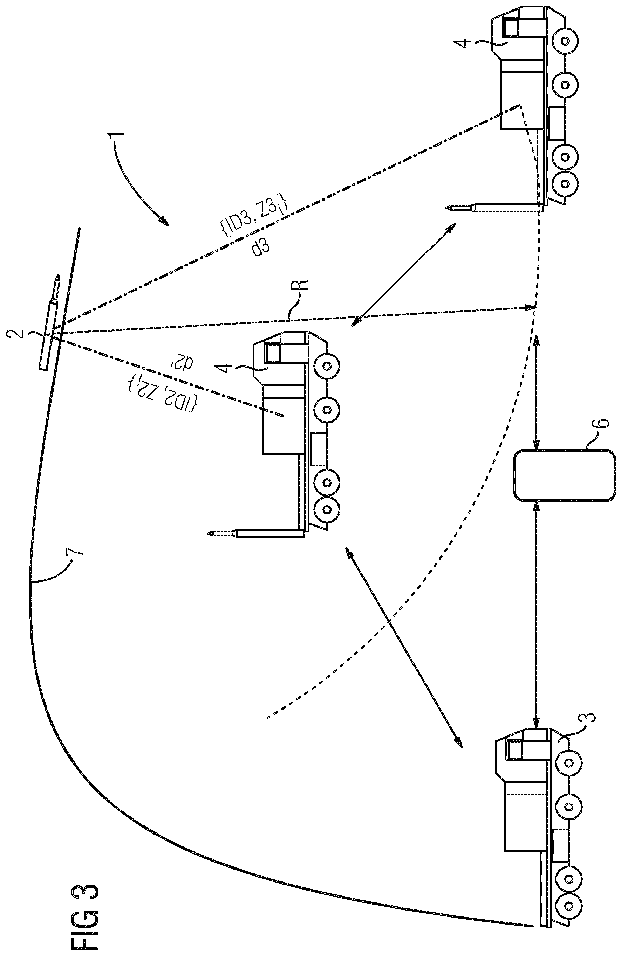

In FIG. 3 ist das Waffensystem 1 nach Abschuss des Effektors 2 in einer zweiten Phase PH2 gezeigt, in der sich der Effektor 2 längs der Flugbahn 7 fortbewegt hat. In dieser zweiten Phase PH2 liegt die Abschusseinheit 3 außerhalb der Übertragungsreichweite R. Jedoch liegt stattdessen nun die zuvor außerhalb der Übertragungsreichweite R gelegene weitere zweite Abschusseinheit 4 innerhalb Übertragungsreichweite R.

Gelangt der Effektor 2 längs der Flugbahn 7 in eine Position in der eine Übertragung mit der zuvor nicht in Übertragungsreichweite R gelegenen Abschusseinheit 4 möglich ist/wird, so kann eine Datenkommunikationsverbindung zwischen Effektor 2 und dieser Abschusseinheit 4 basierend auf einem von der Abschusseinheit 4 gesendeten erfolgreichen Ping-Signal PS (Anklopfsignal) erstellt bzw. verhandelt werden (siehe auch FIG. 6).

Auf ein erfolgreiches Ping-Signal PS beginnt die zweite Abschusseinheit 4 periodisch Zeitstempel Z3ᵢ in eineindeutiger Zuordnung zu den Positionsdaten P3 der Abschusseinheit 4 über die mit dem Effektor 2 hergestellte drahtlose Kommunikationsverbindung zu übermitteln. Die eineindeutige Zuordnung wird dabei, wie in der ersten Phase PH 1, dadurch hergestellt, dass die Zeitstempel Z3ᵢ zusammen mit der zugehörigen Kennung ID3 in einem als 2-Tupel ausgebildeten Datenpaket an den Effektor 2 übermittelt werden: {ID3; Z3ᵢ} (siehe FIG. 6). Damit erhält der Effektor 2 in der zweiten Phase PH2 periodisch Zeitstempel Z2ᵢ, Z3ᵢ, und kann, wie in der ersten Phase PH 1, analoge Positionsinformationen, z.B. Abstände d2' und d3, basierend insbesondere auf entsprechenden Empfangszeitpunkten E2' und E3, ermitteln, und diese in entsprechender Weise zur Triangulation verwenden.

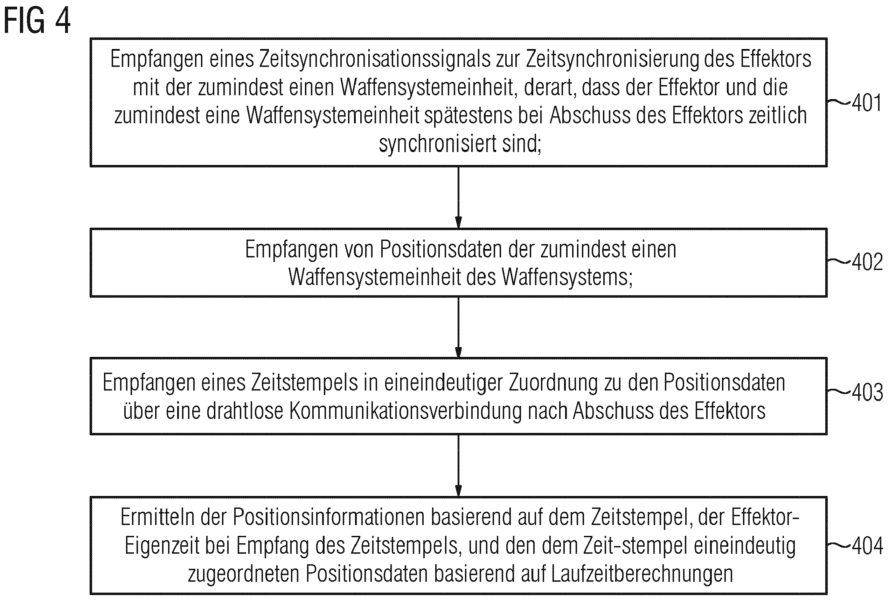

FIG. 4 zeigt beispielhaft ein effektorseitiges Ablaufdiagramm eines Verfahrens zur Ermittlung von Positionsinformationen für den Effektor 2. In einem ersten Schritt 401 empfängt der Effektor 2 ein Zeitsynchronisationssignal {t} zur Zeitsynchronisierung des Waffensystems 1, d.h. zur Zeitsynchronisation des Effektors 2 mit den Waffensystemeinheiten 3, 4, 6. Die Zeitsynchronisation erfolgt dabei derart, dass der Effektor 2 und die zumindest eine Waffensystemeinheit 3, 4, 6 spätestens bei Abschuss des Effektors 2 zeitlich synchronisiert sind.

In einem zweiten Schritt 402 empfängt der Effektor Positionsdaten der zumindest einen Waffensystemeinheit 3, 4, 6 des Waffensystems 1. Der Schritt der Übermittlung der Positionsdaten kann vor oder nach der Zeitsynchronisation erfolgen. Jedoch ist es von Vorteil, wenn die Positionsdaten bereits vor Abschuss an den Effektor 2 übermittelt werden, denn auf diese Weise kann die nach Abschuss zu übermittelnde Datenmenge reduziert werden.

In einem weiteren Schritt 403 empfängt der Effektor 2 einen Zeitstempel (z.B. {IDj; Zji}), wobei der Koeffizient j die Waffensystemeinheit und der Koeffizient i die Sequenz der von der jeweiligen Waffensystemeinheit j übermittelten Zeitstempel kennzeichnet). Die Zeitstempel werden in eineindeutiger Zuordnung zu den Positionsdaten über eine drahtlose Kommunikationsverbindung nach Abschuss des Effektors 2 übermittelt. In einem Ausführungsbeispiel kann die eineindeutige Zuordnung basierend auf einer der jeweiligen Waffensystemeinheit eindeutig zugeordneten Kennung erfolgen.

In einem weiteren Schritt 404 werden die Positionsinformationen basierend auf dem Zeitstempel, der Effektor-Eigenzeit bei Empfang des Zeitstempels, und den dem Zeitstempel eineindeutig zugeordneten Positionsdaten basierend auf Laufzeitberechnungen von Effektor 2 ermittelt. Die so ermittelten Positionsinformationen können beispielsweise zur Korrektur und/oder Überprüfung der durch ein unabhängiges Verfahren, z.B. eine Inertialnavigation, ermittelten Position des Effektors 2 verwendet werden.

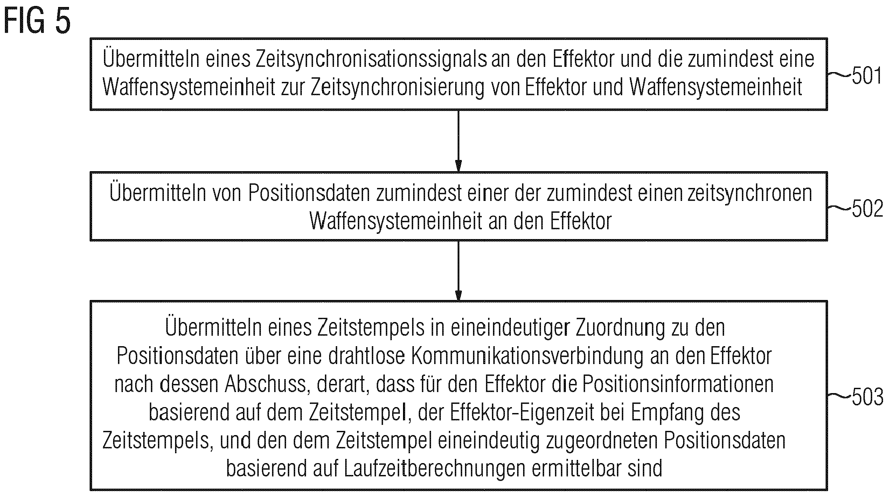

FIG. 5 zeigt beispielhaft ein Ablaufdiagramm eines beispielsweise kontrollrechnerseitig ausführbaren Verfahrens zur Ermittlung von Positionsinformationen für den Effektor 2. In einem ersten Schritt 501 übermittelt eine Waffensystemeinheit 3, 4, 6 ein Zeitsynchronisationssignal an den Effektor 2 und die weiteren Waffensystemeinheiten 3, 4, 6 zur Zeitsynchronisierung des Waffensystems 1, insbesondere zur Zeitsynchronisation von Effektor 2 und Waffensystemeinheit(en) 3, 4, 6.

In einem weiteren Schritt 502 übermittelt die jeweilige Waffensystemeinheit 3, 4, 6 Positionsdaten zumindest einer, vorzugsweise aller verfügbaren und für die Flugbahn 7 des Effektors 2 relevanten Waffensystemeinheiten 3, 4, 6, an den Effektor 2. Die Positionsdaten können, wie bereits erwähnt, vor oder nach der Zeitsynchronisation übermittelt werden.

In einem weiteren Schritt 503 übermittelt die jeweilige Waffensystemeinheit 3, 4, 6 einen Zeitstempel in eineindeutiger Zuordnung zu den Positionsdaten über eine drahtlose Kommunikationsverbindung an den Effektor nach dessen Abschuss.

Die Übermittlung des Zeitstempels erfolgt derart, dass der Effektor 2 die Positionsinformationen basierend auf dem Zeitstempel, der Effektor-Eigenzeit bei Empfang des Zeitstempels, und den dem Zeitstempel eineindeutig zugeordneten Positionsdaten basierend auf Laufzeitberechnungen ermittelbar sind.

Dem Schritt 503 zu Grunde liegt insbesondere die zuvor durchgeführte Zeitsynchronisation auf deren Grundlage und Laufzeitberechnungen Abstände zwischen Effektor 2 und den Positionen der Waffensystemeinheiten 3, 4, 6 beim Empfang des Zeitstempels berechnet werden können. Die so ermittelten Abstände können als Positionsinformationen zur Kontrolle und/oder Korrektor dem Effektor 2 aus anderen Positionsermittlungsverfahren bereits bekannten Positionen verwendet werden.

FIG. 6 zeigt ein beispielhaftes Übertragungsdiagramm eines Verfahrens zur Ermittlung von Positionsinformationen. Die nach dem gezeigten Übertragungsdiagramm übertragenen bzw. empfangenen Daten korrespondieren zu den bezüglich Figuren 1 bis 5 beschriebenen Ausführungsbeispielen. Insoweit wird vollumfänglich auf obige Ausführungen verwiesen. Ferner wird angemerkt, dass die hierin beschriebene Erfindung eine Übertragung bzw. einen Empfang von Daten ausgehend von allen angegebenen Einheiten 2, 3, 4, 6 des Waffensystems 1 umfasst. Entsprechend umfasst die zu Grunde liegende Erfindung auch alle Datenübertragungen zwischen den jeweiligen Einheiten, insbesondere im Zusammenhang mit einer Navigation eines Effektors 2, z.B. eines Lenkflugkörpers, zu einem Zielort bzw. Zielobjekt.

### Bezugszeichen

- 1: Waffensystem
- 2: Effektor
- 3: erste Abschusseinheit
- 4: zweite Abschusseinheiten
- 5: Datenkommunikationsverbindung
- 6: taktisches Kontrollzentrum
- 7: Flugbahn

- t: Zeitsynchronisationssignal
- ID: Kennung
- P: Positionsdaten
- A: Abschusssignal
- R: Datenübertragungsreichweite
- Z: Zeitstempel
- d: Abstand
- PH: Phase
- PS: Ping-Signal

## Patentansprüche

1. Computer-implementiertes Verfahren zur Ermittlung von Positionsinformationen (d1, d2, d3) für einen Effektor (2) nach Abschuss von einer Abschusseinheit (3) eines Waffensystems (1), wobei das Waffensystem (1) den Effektor (2) und zumindest eine vom Effektor (2) verschiedene, mobile oder stationäre Waffensystemeinheit (3, 4, 6) umfasst, und wobei das Verfahren, insbesondere effektorseitig, die folgenden Schritte umfasst:
- Empfangen eines Zeitsynchronisationssignals (t) zur Zeitsynchronisierung des Effektors (2) mit der zumindest einen Waffensystemeinheit (3, 4, 6), derart, dass der Effektor (2) und die zumindest eine Waffensystemeinheit (3, 4, 6) spätestens bei Abschuss des Effektors (2) zeitlich synchronisiert sind;
- Empfangen von Positionsdaten (P) der zumindest einen Waffensystemeinheit (3, 4, 6) des Waffensystems (1);
- Empfangen eines Zeitstempels (Z) in eineindeutiger Zuordnung zu den Positionsdaten (P) über eine drahtlose Kommunikationsverbindung nach Abschuss des Effektors (2); und
- Ermitteln der Positionsinformationen (d1, d2, d3) basierend auf dem Zeitstempel (Z), der Effektor-Eigenzeit (E) bei Empfang des Zeitstempels (Z), und den dem Zeitstempel (Z) eineindeutig zugeordneten Positionsdaten (P).

2. Verfahren nach Anspruch 1, wobei Positionsdaten (P) und Zeitstempel (Z) mit jeweils eineindeutiger Zuordnung von zwei oder mehreren an verschiedenen Positionen befindlichen Waffensystemeinheiten (3, 4, 6) empfangen werden, und die Positionsinformationen (d1, d2, d3) des Weiteren basierend auf Triangulation berechnet werden, wobei die Zeitstempel (Z) der zwei oder mehreren Waffensystemeinheiten (3, 4, 6) hinsichtlich der Zeitsynchronisation (t) vorzugsweise gleich sind.

3. Verfahren nach einem der Ansprüche 1 oder 2, wobei die eineindeutige Zuordnung zwischen Positionsdaten (P) und jeweiligem Zeitstempel (Z) gegeben ist durch eine Verknüpfung von Positionsdaten (P) und Zeitstempel (Z) bei deren Übermittlung.

4. Verfahren nach einem der Ansprüche 1 bis 3, wobei die eineindeutige Zuordnung (ID) zwischen Positionsdaten (P) und jeweiligem Zeitstempel (Z) gegeben ist durch eine eineindeutige Kennung (ID), die zusammen mit den Positionsdaten (P) und/oder dem jeweiligen Zeitstempel (Z) empfangen wird.

5. Verfahren nach einem der Ansprüche 1 bis 4, wobei
- die Positionsdaten (P) zumindest teilweise vor Abschuss des Effektors (2) empfangen werden, und den Positionsdaten (P) jeweils eineindeutig zugeordnete Zeitstempel (Z) nach Abschuss des Effektors (2) empfangen werden und/oder
- die Positionsdaten (P) mit einem Zeitstempel (Z) in eineindeutiger Zuordnung (ID) zumindest teilweise nach Abschuss des Effektors (2) empfangen werden.

6. Verfahren nach einem der Ansprüche 1 bis 5, wobei der Effektor (2) dazu eingerichtet ist, Positionsdaten (P) und/oder Zeitstempel (Z) in jeweils eineindeutiger Zuordnung (ID) nach Abschuss des Effektors (2) von solchen, insbesondere ausgewählten, Waffensystemeinheiten (3, 4, 6) des Waffensystems (1) zu empfangen, welche zumindest abschnittsweise längs der Flugbahn (7) des Effektors (2) in Übertragungsreichweite (R) mit dem Effektor (2) gelangen, wobei eine Auswahl solcher Waffensystemeinheiten (3, 4, 6) vorzugsweise auf Grundlage einer Simulation der Flugbahn (7) des Effektors (2) erfolgt, und wobei weiter vorzugsweise solche Waffensystemeinheiten (3, 4, 6) ausgewählt werden bzw. sind, für welche die Wahrscheinlichkeit zur drahtlosen Kommunikation mit dem Effektor (2) zumindest abschnittsweise längs der Flugbahn (7) über einem vorgegebenen Schwellenwert liegt.

7. Effektor (2), insbesondere Flugkörper, eingerichtet zum Abschuss von einer Abschusseinheit (3) eines Waffensystems (1), umfassend eine elektronische Datenverarbeitungseinheit mit einem Speicher umfassend Instruktionen, die bei Ausführung durch die Datenverarbeitungseinheit ein Verfahren mit den Merkmalen nach einem der Ansprüche 1 bis 6 bewirken.

8. Computer-implementiertes Verfahren zur Ermittlung von Positionsinformationen (d1, d2, d3) für einen Effektor (2) nach Abschuss von einer Abschusseinheit (3) eines Waffensystems (1), wobei das Waffensystem (1) den Effektor (2) und zumindest eine vom Effektor verschiedene mobile oder stationäre Waffensystemeinheit (3, 4, 6) umfasst, wobei das Verfahren die folgenden Schritte umfasst:
- Übermitteln eines Zeitsynchronisationssignals (t) an den Effektor (2) und die zumindest eine Waffensystemeinheit (3, 4, 6) zur Zeitsynchronisierung von Effektor (2) und Waffensystemeinheit (3, 4, 6);
- Übermitteln von Positionsdaten (P) zumindest einer der zumindest einen zeitsynchronen Waffensystemeinheit (3, 4, 6) an den Effektor (2);
- Übermitteln eines Zeitstempels (Z) in eineindeutiger Zuordnung zu den Positionsdaten (P) über eine drahtlose Kommunikationsverbindung an den Effektor (2) nach dessen Abschuss, derart, dass für den Effektor (2) die Positionsinformationen (d1, d2, d3) basierend auf dem Zeitstempel (Z), der Effektor-Eigenzeit (E) bei Empfang des Zeitstempels (Z), und den dem Zeitstempel (Z) eineindeutig zugeordneten Positionsdaten (P) ermittelbar sind.

9. Verfahren nach Anspruch 8, wobei die Positionsdaten (P) und/oder Zeitstempel (Z) mit jeweils eineindeutiger Zuordnung (ID) zumindest teilweise von der jeweiligen Waffensystemeinheit (3, 4, 6) selbst oder von einer mit der Waffensystemeinheit (3, 4, 6) datentechnisch verbundenen Kontrolleinheit (6) an den Effektor (2) übertragen werden.

10. Verfahren nach einem der Ansprüche 8 oder 9, wobei für zwei oder mehrere an verschiedenen Positionen befindliche Waffensystemeinheiten (3, 4, 6) verfügbare Positionsdaten (P) korrespondierende Zeitstempel (Z) mit jeweils eineindeutiger Zuordnung (ID) zu den jeweiligen Positionsdaten (P) an den Effektor (2) zum Zwecke der Ermittlung der Positionsinformationen (d1, d2, d3) übertragen werden, wobei die Übertragung der Zeitstempel (Z) vorzugsweise zeitsynchron erfolgt.

11. Verfahren nach einem der Ansprüche 8 bis 10, wobei zumindest eine der zumindest einen Waffensystemeinheiten (3, 4, 6) nach Abschuss des Effektors wiederholt Zeitstempel (Z) mit eineindeutiger Zuordnung (ID) zu den Positionsdaten (P) über die drahtlose Kommunikationsverbindung an den Effektor (2) übermittelt.

12. Verfahren nach einem der Ansprüche 8 bis 11, wobei bei einer Veränderung der Positionsdaten (P) einer der zumindest einen Waffensystemeinheit (3, 4) nach Abschuss des Effektors (2) die veränderten Positionsdaten (P) und ein den veränderten Positionsdaten (P) eineindeutig zugeordneter Zeitstempel (Z) übertragen werden, und/oder wobei bei unveränderten Positionsdaten (P) in aufeinanderfolgenden Übertragungen jeweils lediglich ein Zeitstempel (Z) in eindeutiger Zuordnung (ID) zu den unveränderten Positionsdaten (P) an den Effektor (2) übertragen wird.

13. Verfahren nach einem der Ansprüche 8 bis 12, wobei an den Effektor ein Anklopfsignal (PS) übermittelt wird, und wobei zumindest eine zeitlich erstmalige Übermittlung der Positionsdaten (P) und/oder des Zeitstempels (Z) an den Effektor (2) nur bei erfolgreichem Anklopfsignal (PS) an den Effektor (2) erfolgt.

14. Verfahren nach einem der Ansprüche 8 bis 13, wobei die eineindeutige Zuordnung (ID) zwischen Positionsdaten (P) und Zeitstempel (Z) dadurch erfolgt, dass Positionsdaten (P) und zugeordneter Zeitstempel (Z) zusammen an den Effektor (2) übermittelt werden und/oder dass die Positionsdaten (P) und/oder der jeweilige Zeitstempel (Z) zusammen mit einer jeweils eineindeutigen Kennung (ID) an den Effektor (2) übermittelt werden, wobei die Kennung (ID) vorzugsweise in eineindeutiger Weise der Waffensystemeinheit (3, 4, 6) zugeordnet ist.

15. Verfahren nach einem der Ansprüche 8 bis 14, wobei lediglich solche Waffensystemeinheiten (3, 4, 6) für eine Übertragung von Positionsdaten (P) und/oder Zeitstempel (Z) an den Effektor (2) ausgewählt werden, welche zumindest abschnittsweise längs der Flugbahn (7) des Effektors (2) in Übertragungsreichweite (R) mit dem Effektor (2) gelangen, wobei eine Auswahl solcher Waffensystemeinheiten (3, 4, 6) vorzugsweise auf Grundlage einer Simulation der Flugbahn (7) des Effektors (2) erfolgt, und wobei weiter vorzugsweise solche Waffensystemeinheiten (3, 4, 6) ausgewählt werden, für welche die Wahrscheinlichkeit zur drahtlosen Kommunikation mit dem Effektor (2) zumindest abschnittsweise längs der Flugbahn (7) über einem vorgegebenen Schwellenwert liegt.

16. Rechnereinheit, insbesondere Kommandorechnereinheit (6) zur Überwachung und Steuerung einer zum Abschuss eines Effektors (2) ausgebildeten Abschusseinheit (3, 4) eines Waffensystems (1) und/oder eines Effektors (2), umfassend eine elektronische Datenverarbeitungseinheit und einen elektronischen Datenspeicher umfassend Instruktionen, die bei Ausführung durch die Datenverarbeitungseinheit ein Verfahren mit den Merkmalen nach einem der Ansprüche 1 bis 6 oder 8 bis 15 bewirken.

17. Waffensystem (1) umfassend zumindest einen Effektor (2) nach Anspruch 7 und zumindest eine Rechnereinheit nach Anspruch 16.
